# EUROPÄISCHE PATENTSCHRIFT

(11) **EP 4 416 412 B1**
(45) Veröffentlichungstag und Bekanntmachung des Hinweises auf die Patenterteilung: **05.11.2025**
(21) Anmeldenummer: 21794325.7
(22) Anmeldetag: 12.10.2021
(51) Int. Cl.: B01D 33/06, F16J 15/18

(54) **VORRICHTUNG ZUM SPANNEN EINER STOPFBUCHSPACKUNG**
DEVICE FOR CLAMPING A STUFFING BOX PACKING
DISPOSITIF DE SERRAGE D'UNE GARNITURE DE PRESSE-ÉTOUPE

(43) Veröffentlichungstag der Anmeldung: 21.08.2024
(73) Patentinhaber: BHS-Sonthofen GmbH, 87527 Sonthofen (DE)
(72) Erfinder: LABISCH, Wolfgang, 87527 Sonthofen (DE)
(74) Vertreter: Weickmann & Weickmann PartmbB
(86) Internationale Anmeldenummer: PCT/EP2021/078163
(87) Internationale Veröffentlichungsnummer: WO 2023/061560

(56) Entgegenhaltungen:
- DE-A1- 4 318 157
- US-A- 2 518 980

## Beschreibung

Die Erfindung betrifft eine Vorrichtung zum Spannen einer Stopfbuchspackung, welche gegen eine durch die Stopfbuchspackung abzudichtende und wie die Stopfbuchspackung nicht zu der Spannvorrichtung gehörende übergeordnete Baueinheit anliegt, insbesondere zum Spannen der Stopfbuchspackung eines Druckdrehfilters, umfassend eine Stopfbuchsbrille, welche dazu ausgebildet und bestimmt ist, gegen eine freie Seite der Stopfbuchspackung anzuliegen, und eine Mehrzahl von Spannelementen, welche dazu ausgelegt und bestimmt sind, die Stopfbuchsbrille gegen die Stopfbuchspackung und somit die Stopfbuchspackung gegen die übergeordnete Baueinheit zu drängen.

Stopfbuchspackungen werden bei übergeordneten Baueinheiten allgemein eingesetzt, um ein im Betrieb der übergeordneten Baueinheit bewegliches Element der übergeordneten Baueinheit gegenüber einem im Betrieb der übergeordneten Baueinheit stationären Element der übergeordneten Baueinheit abzudichten.

Beispielsweise vertreibt die Anmelderin seit vielen Jahren Druckdrehfilter. Bei solchen Druckdrehfiltern erfolgt die Abdichtung der mit Überdruck beaufschlagten Prozessräume zur Umgebung hin üblicherweise durch eine Stopfbuchspackung zwischen der rotierenden Filtertrommel und dem stationären Filtergehäuse. Um die Abdichtung auch nach längerer Betriebszeit zuverlässig gewährleisten zu können, muss die Stopfbuchspackung, insbesondere in Hinblick auf ein Nachlassen der Elastizität des Materials der Stopfbuchspackung sowie aufgrund von Verschleiß der Stopfbuchspackung an der Gleitfläche zur Filtertrommel, in regelmäßigen Zeitabständen nachgespannt werden. Das Ergebnis des Nachspannens und damit die Qualität der Abdichtung ist stark abhängig von der Erfahrung und sorgfältigen Arbeitsweise des Bedienpersonals.

Oft werden die Spannelemente der Stopfbuchspackung nur an jenen Stellen des Umfangs nachgezogen, an denen Leckage bemerkt worden ist, und nicht gemäß Betriebsanleitung an allen Spannelementen mit dem gleichen Weg. Dadurch kann sich die Stopfbuchsbrille schräg stellen und schlimmstenfalls die Filtertrommeloberfläche beschädigen.

Zur Lösung dieser Probleme wurde von der Anmelderin in der DE 10 2017 221 088 A1 eine Ausführungsform vorgeschlagen, bei der alle Spannelemente, beispielsweise mittels einer Kette, derart in drehmomentübertragender Weise verbunden sind, dass eine Rotation eines der Spannelemente zwangsweise auch eine Rotation der anderen Spannelemente hervorruft. Auch wenn sich diese Ausführungsform in der Praxis grundsätzlich bewährt hat, gab es doch immer wieder Situationen, in denen ein individuelles Spannen einzelner Spannelemente vorteilhaft gewesen wäre.

In der gattungsbildenden DE 43 18 157 A1 ist eine Vorrichtung zum Spannen einer Stopfbuchspackung gemäß der Präambel von Anspruch 1 offenbart. Zum weiteren Stand der Technik sei auf die US 2 518 980 A verwiesen.

Es ist Aufgabe der vorliegenden Erfindung, hier Abhilfe zu schaffen.

Diese Aufgabe wird erfindungsgemäß durch eine Spannvorrichtung der eingangs genannten Art gelöst, bei welcher jedem der Spannelemente eine gesonderte motorische Antriebseinheit zugeordnet ist. Auf diese Weise können die Spannelemente gemeinsam oder einzeln betätigt werden. Auch ist es möglich, gezielt nur eine Untergruppe von Spannelementen zu betätigen.

In Abhängigkeit von den spezifischen Parametern des Einzelfalls, insbesondere der Größe der übergeordneten Baueinheit, können beispielsweise zwischen drei und acht Spannelemente vorgesehen sein. Es ist jedoch auch denkbar, mehr als acht Spannelemente vorzusehen.

Erfindungsgemäß ist vorgesehen, dass wenigstens eine motorische Antriebseinheit, vorzugsweise alle motorischen Antriebseinheiten, eine fluidisch antreibbare motorische Antriebseinheit umfasst, beispielsweise eine pneumatisch antreibbare motorische Antriebseinheit, vorzugsweise einen pneumatisch betätigbaren Radialkolbenmotor. Fluidisch antreibbare motorische Antriebseinheiten haben den Vorteil, dass am Standort der übergeordneten Baueinheit üblicherweise ohnehin eine Zuführung für wenigstens ein Betriebsfluid vorhanden ist. Insbesondere haben pneumatisch betätigbare Radialkolbenmotoren den Vorteil, gerade bei niedrigen Drehzahlen ein großes Drehmoment bereitstellen zu können.

Um die Bewegung der Spannelemente fein dosieren zu können, umfasst wenigstens eine motorische Antriebseinheit, umfassen vorzugsweise alle motorischen Antriebseinheiten, ein Untersetzungsgetriebe, beispielsweise ein Schneckengetriebe. Schneckengetriebe haben in diesem Zusammenhang den Vorteil, selbsthemmend zu sein. Daher brauchen keine zusätzlichen Vorkehrungen getroffen zu werden, um nach dem Abschalten der fluidisch antreibbaren motorischen Antriebseinheit ein unbeabsichtigtes Wiederlösen des zugeordneten Spannelements zu verhindern.

Die Kombination eines Schneckengetriebes mit einem pneumatisch betätigbaren Radialkolbenmotor ist von besonderem Vorteil, weil sie sicherstellt, dass das Losbrechmoment der Selbsthemmung des Schneckengetriebes durch den pneumatisch betätigbaren Radialkolbenmotor zuverlässig überwunden werden kann.

In Weiterbildung der Erfindung wird vorgeschlagen, dass die antriebsseitig mit der fluidisch antreibbaren motorischen Antriebseinheit verbundene Schnecke des Schneckengetriebes abtriebsseitig mit einem axial festen Keilverzahnungselement des Schneckengetriebes in Untersetzungseingriff steht, und dass das Keilverzahnungselement mit einem Spannelement in Gewindeeingriff steht, das axial verlagerbar, aber drehbar angeordnet ist. Beispielsweise kann das Spannelement ein Außengewinde aufweisen, das mit dem Innengewinde einer mit Innengewinde versehenen Hohlstange in Gewindeeingriff steht.

Das Keilverzahnungselement kann an seinem freien, d.h. vom Spannelement abgewandten, Ende mit einem Werkzeugangriffsprofil ausgebildet sein, um die Stopfbuchspackung, beispielsweise bei Ausfall der Fluidzufuhr, auch von Hand nachspannen zu können. Das Werkzeugangriffsprofil kann beispielsweise ein Sechskantprofil sein.

Um die von einer Relativbewegung zwischen dem beweglichen Element und dem stationären Element der übergeordneten Baueinheit und damit einer Relativbewegung zwischen der Stopfbuchspackung und der Stopfbuchsbrille herrührenden Momente auffangen zu können, kann vorgesehen sein, dass die Stopfbuchsbrille oder ein mit ihr verbundenes Element wenigstens eine axiale Durchgangsöffnung aufweist, in welcher ein Axialgleitlager aufgenommen ist, welches dazu ausgebildet und bestimmt ist, mit einem zugeordneten an der übergeordneten Baueinheit befestigten Führungsbolzen in Gleiteingriff zu treten. Auf diese Weise können diese Momente von den Spannelementen ferngehalten werden, die somit ausschließlich für das Spannen der Stopfbuchsbrille ausgelegt sein können. Vorzugsweise kann eine Mehrzahl derartiger axialer Durchgangsöffnungen vorgesehen sein.

Ferner kann die Gewichtskraft der Antriebseinheit über einen, beispielsweise zylindrisch ausgebildeten, Abschnitt des Keilverzahnungselements, der in einer Durchgangsöffnung eines Lagerbocks drehbar gelagert ist, und diesen Lagerbock an das stationäre Element der übergeordneten Baueinheit weitergeleitet werden. Auf diese Weise braucht die Verbindung der Antriebseinheit mit einem die Stopfbuchsdichtung abdeckenden Deckelelement lediglich das Drehmoment aufzunehmen, welches durch den Betrieb der Antriebseinheit erzeugt wird.

In Weiterbildung der Erfindung wird vorgeschlagen, dass die Stopfbuchsbrille in einem orthogonal zu ihrer Längserstreckung genommenen Schnitt eine im Wesentlichen rechteckige Querschnittsfläche aufweist. Auf diese Weise kann die Kraft von dem Keilverzahnungselement über das Spannelement im Wesentlichen geradlinig in die Stopfbuchsbrille eingeleitet werden. Die Längserstreckung der Stopfbuchsbrille kann dabei in Umfangsrichtung verlaufen, wie dies beispielsweise bei einem Druckdrehfilter der Fall ist.

Um die Steifigkeit der Stopfbuchsbrille erhöhen zu können, wird vorgeschlagen, dass die lange Seite des Rechtecks wenigstens dreimal so lang wie die kurze Seite des Rechtecks ist.

Um die Stopfbuchsbrille in einfacher Weise montieren und demontieren zu können, kann vorgesehen sein, dass die Stopfbuchsbrille in eine Mehrzahl von Segmenten unterteilt ist. Vorteilhafterweise kann dabei für jedes Spannelement ein gesondertes Segment vorgesehen sein. Grundsätzlich ist es jedoch auch denkbar, dass wenigstens einem Segment zwei oder mehr Spannelemente zugeordnet sind. Die Anzahl der Segmente kann beispielsweise derart gewählt sein, dass die einzelnen Segmente bezüglich Größe und/oder Gewicht leicht handhabbar sind.

Um gleichwohl eine insgesamt steife Stopfbuchsbrille bereitstellen zu können, wird in Weiterbildung der Erfindung vorgeschlagen, dass die freien Enden zweier einander benachbarter Segmente formschlüssig ineinandergreifend ausgebildet sind. Durch diese Ausgestaltung kann die Steifigkeit der Stopfbuchsbrille erhöht werden, da auch Kräfte, die von einem, beispielsweise mittig an dem Segment angreifenden, Spannelement auf das Segment ausgeübt werden, über den Formschluss an die jeweils benachbarten Segmente weitergeleitet werden können und diese benachbarten Segmente somit einer Verformung des betrachteten Segments entgegenwirken.

Ferner kann vorgesehen sein, dass der Formschluss in wenigstens zwei, vorzugsweise allen drei, der Richtungen Axialrichtung, Radialrichtung und Umfangsrichtung wirkt.

Zusätzlich oder alternativ zu dem Formschluss kann vorgesehen sein, dass die freien Enden wenigstens zweier einander benachbarter Segmente mittels wenigstens einer radial verlaufenden Schraube miteinander verbunden sind, und/oder dass die freien Enden wenigstens zweier einander benachbarter Segmente mittels eines axial an den Segmenten anliegenden Koppelelements miteinander verbunden sind. Auch durch diese Weiterbildungen kann die Steifigkeit der Stopfbuchsbrille weiter erhöht werden. Bei Verwendung eines Koppelelements kann dieses die Durchgangsöffnung mit dem Axialgleitlager für den Führungsbolzen aufweisen.

In Weiterbildung der Erfindung wird ferner vorgeschlagen, dass an wenigstens drei über den Umfang der Stopfbuchsbrille verteilt angeordneten Stellen jeweils wenigstens ein Wegesensor angeordnet ist, der dazu ausgelegt und bestimmt ist, den Abstand der Stopfbuchsbrille von der übergeordneten Baueinheit zu erfassen.

Zudem kann wenigstens ein Drucksensor vorgesehen sein, welcher dazu ausgelegt und bestimmt ist, den Druck zu erfassen, mit dem das Antriebsfluid zugeführt wird. Da die Fläche, mit der die Spannelemente gegen die Stopfbuchsbrille drücken, konstant ist, ist dieser Druck proportional zu der Kraft, mit der die Spannelemente gegen die Stopfbuchsbrille drücken. Der Vergleich dieser Kraft mit dem durch sie bewirkten Weg kann bei bekanntem Prozessdruck in dem Prozessraum der übergeordneten Baueinheit Rückschlüsse auf den Zustand der Stopfbuchspackung zulassen. Dies ermöglicht es, die Spannelemente immer mit genau der Kraft gegen die Stopfbuchsbrille anzudrücken, die erforderlich ist, um die Abdichtung des Prozessraums sicherzustellen. Hierdurch kann eine Überbeanspruchung der Stopfbuchspackung und damit deren vorzeitiger Verschleiß vermieden werden.

Zur Verwirklichung der vorstehend bereits angesprochenen Ansteuerung der Spannelemente bzw. der diesen zugeordneten fluidisch antreibbaren motorischen Antriebseinheiten kann die Spannvorrichtung ferner eine Ventilanordnung umfassen, welche dazu ausgebildet und bestimmt ist, der Mehrzahl von fluidisch antreibbaren motorischen Antriebseinheiten Antriebsfluid zuzuführen bzw. von diesen wieder abzuführen. Insbesondere kann jeder fluidisch antreibbaren motorischen Antriebseinheit eine gesonderte Ventileinheit zugeordnet sein.

Beispielsweise kann die Ventilanordnung wenigstens einer Ventileinheit ein 5/3-Wegeventil umfassen.

In Weiterbildung der Erfindung kann zudem eine Steuereinheit vorgesehen sein, welche dazu ausgelegt und bestimmt ist, in einem ersten Betriebsmodus die Ventileinheiten gemeinsam im Sinne einer Antriebsfluidzuführung bzw. -abführung anzusteuern, und in einem zweiten Betriebsmodus die Ventileinheiten einzeln oder in Untergruppen im Sinne einer Antriebsfluidzuführung bzw. -abführung anzusteuern. Dabei kann der erste Betriebsmodus beispielsweise dann eingesetzt werden, wenn es darum geht, die Stopfbuchsbrille bei der Erstmontage oder nach dem Wechsel der Stopfbuchspackung mit gleichmäßiger Kraft gegen die Stopfbuchspackung anzulegen. Hierbei können in einer ersten Phase der Stellbewegung auch bei Einsatz von pneumatisch antreibbaren Rotationskolbenmotoren vergleichsweise große Wege zurückgelegt werden, da für die bloße Bewegung der Stopfbuchsbrille vergleichsweise geringe Drehmomente ausreichen. **In** einer zweiten Phase kann die Stopfbuchsbrille dann mit einer vorbestimmten Kraft gegen die Stopfbuchspackung angedrückt werden. Hierbei werden pro Zeiteinheit geringere Wege zurückgelegt, so dass auch bei Einsatz von pneumatisch antreibbaren Rotationskolbenmotoren vergleichsweise hohe Drehmomente und damit Anstellkräfte zur Verfügung stehen. Reicht der Fluiddruck bei einer bestimmten Antriebseinheit nicht mehr aus, um diese weiterzudrehen, so bleibt diese einfach stehen. Auf diese Weise wird erreicht, dass die Stopfbuchsbrille an der gesamten Stopfbuchspackung mit der gleichen Kraft anliegt. Der zweite Betriebsmodus kann dann dazu genutzt werden, die Stopfbuchsbrille in Abhängigkeit vom Messergebnis der Wegesensoren an die Gegebenheiten der Stopfbuchspackung anzupassen, indem einzelne Spannelemente oder wenigstens eine Gruppe von Spannelementen weiter betätigt werden.

Ist jeder Antriebseinheit eine gesonderte Ventileinheit zugeordnet, so kann die Gruppenbildung dynamisch erfolgen. Es ist jedoch auch denkbar, die Gruppen statisch vorzudefinieren und somit Kosten für Ventileinheiten einzusparen.

Die Erfindung wird im Folgenden anhand von Ausführungsbeispielen mit Bezug auf die begleitenden Zeichnungen näher erläutert werden.

Es stellt dar:
- Figur 1: eine perspektivische Ansicht eines Druckdrehfilters, welcher mit einer Ausführungsform der erfindungsgemäßen Vorrichtung ausgerüstet ist;
- Figur 2: einen Seitenquerschnitt eines Ausschnitts des Druckdrehfilters und der erfindungsgemäßen Vorrichtung gemäß Figur 1;
- Figur 3: eine Stirnansicht einer erfindungsgemäßen Stopfbuchsbrille in Axialrichtung gesehen;
- Figur 4: eine vergrößerte Ansicht des Details IV der Stopfbuchsbrille gemäß Figur 3;
- Figur 5: das Detail IV der Stopfbuchsbrille gemäß Figur 4, jedoch in Radialrichtung gesehen;
- Figur 6: einen Seitenquerschnitt eines Führungsbolzens der Stopfbuchsbrille;
- Figur 7: eine Stirnansicht eines Ausschnitts eines erfindungsgemäßen Druckdrehfilters;
- Figur 8: einen Seitenquerschnitt zur Erläuterung des Aufbaus und der Funktion eines Wegesensors;
- Figur 9: eine schematische Darstellung einer erfindungsgemäßen Ventilanordnung;
- Figur 10: eine vergrößerte schematische Darstellung einer erfindungsgemäßen motorischen Antriebseinheit mit einer Ventileinheit gemäß Figur 9.

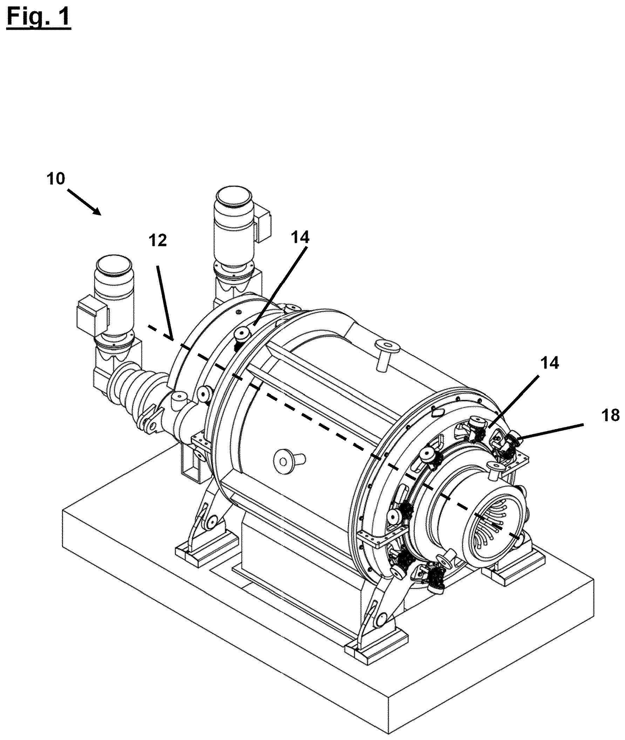

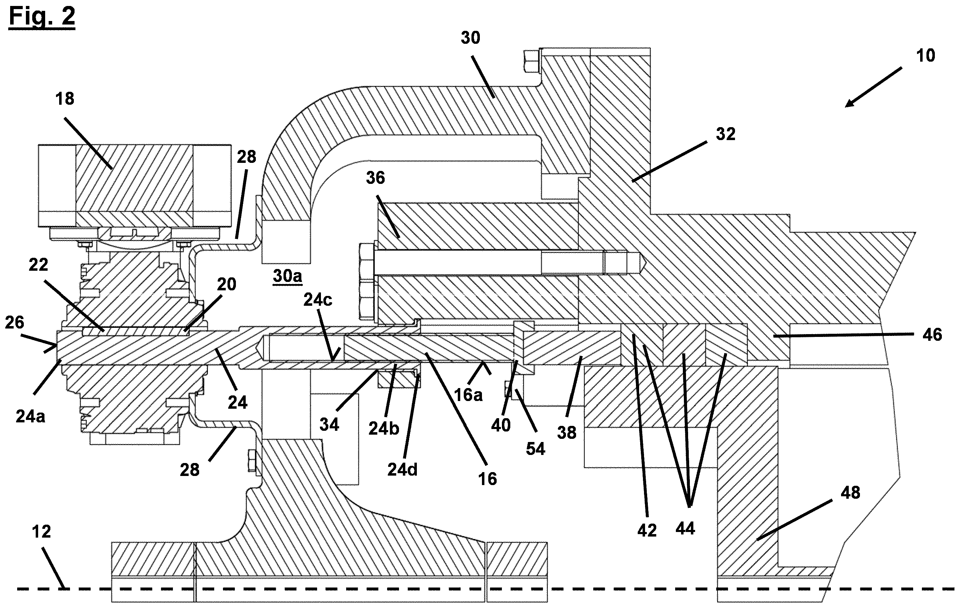

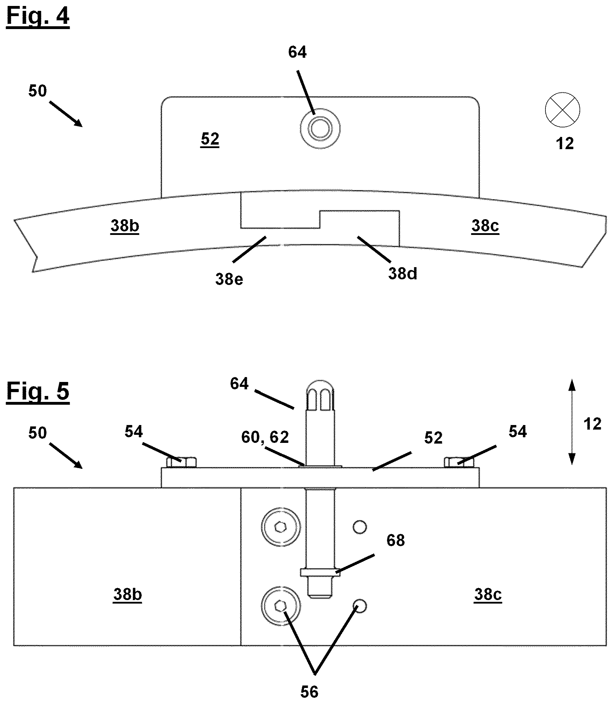

In den Figuren 1 und 2 ist ein Druckdrehfilter als ein Beispiel einer übergeordneten Baugruppe ganz allgemein mit 10 bezeichnet. Entlang einer Längsachse 12, die die Axialrichtung beschreibt, ist jeweils an einem vorderen Ende und an einem hinteren Ende des Druckdrehfilters 10 eine erfindungsgemäße Vorrichtung 14 zum Spannen einer Stopfbuchspackung 42 installiert. Orthogonal zur Längsachse 12 verläuft eine Radialrichtung 13 (siehe Figur 4) Jede der Spannvorrichtungen 14 umfasst eine Mehrzahl von Spannelementen 16. Jedem der Spannelemente 16 ist eine gesonderte fluidisch antreibbare motorische Antriebseinheit 18 zugeordnet. Die motorische Antriebseinheit 18 kann beispielsweise ein pneumatisch betätigbarer Radialkolbenmotor sein.

Mit Bezug auf Figur 2 ist mit der motorischen Antriebseinheit 18 ein Untersetzungsgetriebe 20, beispielsweise ein Schneckengetriebe, verbunden. Eine (nicht dargestellte) Schnecke steht mit einem axial festen Keilverzahnungselement 24 in Untersetzungseingriff und bildet mit diesem das Schneckengetriebe 20. Das Keilverzahnungselement 24 ist im Wesentlichen zylindrisch mit einer nach radial außen weisenden Keilverzahnung ausgebildet.

An einem freien Ende 24a des Keilverzahnungselements 24, also einem axial weiter außen gelegenen Ende, ist ein Werkzeugangriffsprofil 26 ausgebildet. Dieses Werkzeugangriffsprofil 26 kann beispielsweise als Sechskantprofil ausgebildet sein.

Die motorische Antriebseinheit 18 ist über Halter 28 an einem Deckelelement 30 abgestützt, welches seinerseits an einem stationären Element 32 des Druckdrehfilters 10 befestigt ist, beispielsweise durch Schrauben, Nieten, Kleben und dergleichen. Über diese Halter 28 wird zum einen ein Verdrehen der Antriebseinheit 18 um die Längsachse des Keilverzahnungselements 24 und zum anderen ein axiales Verrutschen der Schnecke 22 und des Keilverzahnungselements 24 verhindert. In dem Deckelelement 30 ist eine Deckelöffnung 30a vorgesehen, durch die das Keilverzahnungselement 24 in das Deckelelement hineinragt.

An seinem axial weiter innen liegenden Endabschnitt 24b ist das Keilverzahnungselement 24 als Hohlstange ausgebildet und steht mit dem Spannelement 16 in Gewindeeingriff. Hierzu weist das Keilverzahnungselement 24 ein Innengewinde 24c auf und ist das Spannelement 16 mit einem Außengewinde 16a versehen, welches mit dem Innengewinde 28c des Keilverzahnungselements 24 in Gewindeeingriff steht. So kann erreicht werden, dass das Spannelement 16 axial verlagerbar ist.

Das Keilverzahnungselement 24 ist an dem axial weiter innen liegenden Endabschnitt 24b durch eine Durchgangsöffnung 34 eines Stabilisierungselements 36 geführt. In der Durchgangsöffnung 34 befindet sich ein Lager, das dazu ausgebildet und bestimmt ist, eine Drehbewegung des Keilverzahnungselements 24 zu stützen. Das Stabilisierungselement 36 ist mit dem stationären Element 32 des Druckdrehfilters 10 betriebsfest verbunden, beispielsweise durch Schrauben, Nieten, Kleben und dergleichen.

Eine axiale Bewegung des Keilverzahnungselements 24 in Axialrichtung nach außen kann dadurch vermieden werden, dass das Keilverzahnungselement 24 an seinem axial weiter innen liegenden Ende eine radiale Schulter 24d aufweist, die an dem Stabilisierungselement 36 anliegt.

An seinem dem Innengewinde 16a gegenüberliegenden Ende liegt das Spannelement 16 mit einer Aufnahme 40 an der Stopfbuchsbrille 38 an. Das Zusammenwirken der Aufnahme 40 mit der Stopfbuchsbrille 38 verhindert auch ein Verdrehen des Spannelements 16 bei einem Verdrehen des Keilverzahnungselements 24 und erzeugt so eine Stellbewegung des Spannelements 16 gegen die Stopfbuchsbrille 38.

Die Stopfbuchsbrille 38 ist derart eingerichtet, dass sie gegen eine Stopfbuchspackung 42 drückt, welche hier mehrere Stopfpackungsringe 44 umfasst. Auf ihrer von der Stopfbuchsbrille 38 abgewandten Seite liegt die Stopfbuchspackung 42 gegen eine radial nach innen weisende Schulter 46 des stationären Elements 32 des Druckdrehfilters 10 an. Auf ihrer radial äußeren Seite liegt die Stopfbuchspackung 42 an dem stationären Element 32 des Druckdrehfilters 10 an. Und auf ihrer radial inneren Seite liegt die Stopfbuchspackung 42 an einem beweglichen Element 48 des Druckdrehfilters 10 an.

Die Stopfbuchsbrille 38 weist in einem orthogonal zu ihrer Längserstreckung genommenen Schnitt, wie in Figur 2 dargestellt, einen im Wesentlichen rechteckigen Querschnitt auf. Bei der in Figur 2 dargestellten Ausführungsform erstreckt sich die lange Seite des Rechtecks in Axialrichtung, und ist hier ungefähr dreimal so lang, wie die kurze Seite des Rechtecks.

Für das Spannen der Stopfbuchspackung 42 wird wie folgt vorgegangen. Die motorische Antriebseinheit 18 versetzt das Keilverzahnungselement 24 mittels des Schneckengetriebes 20 in Rotation. Dadurch, dass das Innengewinde 24c des Keilverzahnungselements 24 in Eingriff mit dem Außengewinde 16a des Spannelements 16 steht, und die Aufnahme 40 mit der Stopfbuchsbrille 38 zusammenwirkt, wird die Drehbewegung des Keilverzahnungselements 24 so auf das Spannelement 16 überführt, dass letzteres in Axialrichtung ein-und/oder ausgezogen wird. Die axiale Bewegung des Spannelements 16 bewirkt eine analoge axiale Bewegung der Stopfbuchsbrille 38. Bei einer axialen Bewegung der Stopfbuchsbrille 38 in Richtung der Stopfbuchspackungsschulter 46 wird die Stopfbuchspackung 42 gegen die Stopfbuchspackungsschulter 46 gedrückt und dehnt sich in radialer Richtung aus. So dichtet die Stopfbuchspackung 42 das stationäre Element 32 und das bewegliche Element 48 an dessen Gleitfläche ab. Es versteht sich von selbst, dass für ein Lösen der Stopfbuchspackung 42 die Drehrichtung des Keilverzahnungselements 24 nur umgekehrt zu werden braucht.

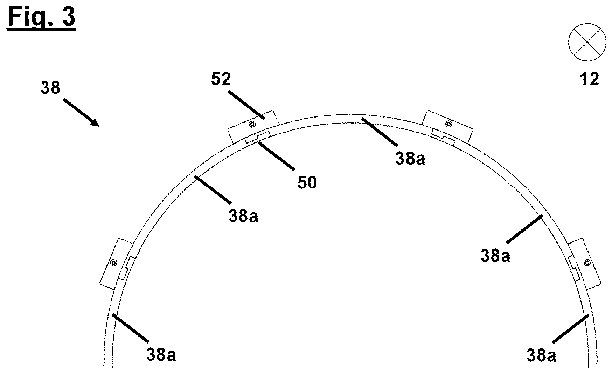

Mit Bezug auf die Figuren 3 bis 5 ist die Stopfbuchsbrille 38 im Wesentlichen ringförmig ausgebildet, wobei sie eine Mehrzahl von miteinander verbundenen Segmenten 38a (siehe Figur 3) bzw. 38b, 38c (siehe Figuren 4 und 5) aufweisen kann. An Verbindungsabschnitten 50 sind jeweils zwei benachbarte Segmente miteinander verbunden.

In der Detailansicht der Figur 4 ist dargestellt, wie ein erstes Segment 38b mit einem zweiten Segment 38c ineinandergreift. Hierzu weist das erste Segment 38b an einem ersten Ende einen zurückgesetzten Endabschnitt 38d auf. Benachbart zu dem zurückgesetzten Endabschnitt 38d ist das erste Segment 38b mit einer Einbuchtung 38e versehen. Das benachbarte (zweite) Ende des zweiten Segments 38c ist entsprechend komplementär zu dem ersten Ende des ersten Segments 38b ausgebildet, so dass eine formschlüssige Verbindung wenigstens in Radial- und Umfangsrichtung entsteht. Beispielsweise können der zurückgesetzte Endabschnitt 38d und die Einbuchtung 38e des ersten Segments 38b nach radial außen zurückgesetzt sein und das zweite Segment 38c mit einer entsprechenden Kontur nach radial innen hin ausgebildet sein.

An dem Verbindungsabschnitt 50 ist ferner ein Koppelelement 52 vorgesehen, das axial an den benachbarten Segmenten 38b, 38c anliegt. Dieses Koppelelement 52 liegt an den Segmenten 38b, 38c an und verbindet das erste Segment 38b und das zweite Segment 38c miteinander. Hierzu ist das Koppelelement 52 mit Befestigungselementen 54 an den benachbarten Segmenten 38a befestigt, beispielsweise verschraubt.

Wie aus Figur 5 ersichtlich ist, sind die beiden benachbarten Segmente 38b, 38c ferner mittels radial verlaufender Schrauben 56 miteinander verbunden. Die Schrauben 56 können durch die Einbuchtung 38e des einen Segments und den zurückgesetzten Endabschnitt 38d des benachbarten Segments verlaufen. Für eine weitere Erhöhung der Stabilisierung können jeweils zwei Schrauben 56 von radial außen nach radial innen verlaufen, und zwei Schrauben 56 desselben Verbindungsabschnitts 50 in umgekehrter Richtung.

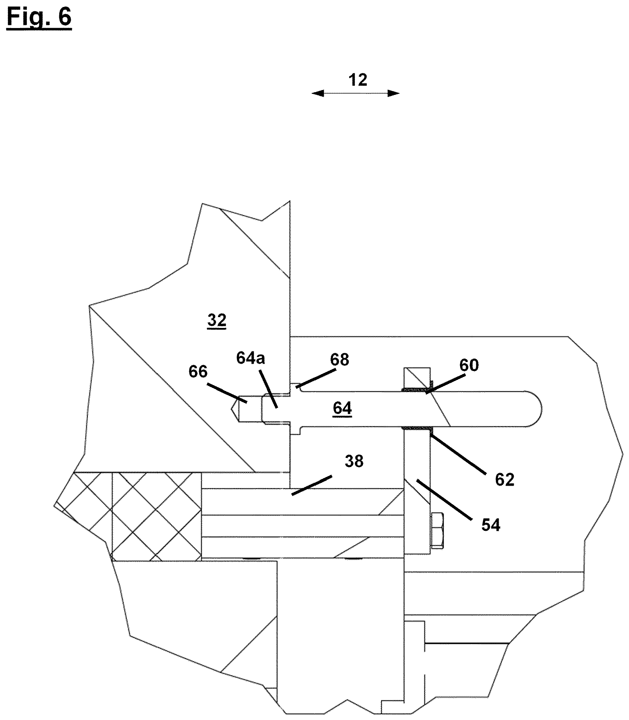

Gemäß Figur 6 ist das Koppelelement 52 ferner mit einer axialen Durchgangsöffnung 60 versehen. In dieser axialen Durchgangsöffnung 60 ist ein Axialgleitlager 62 aufgenommen, durch welches ein Führungsbolzen 64 hindurchtritt. Der Führungsbolzen 64 ist nicht nur über das Koppelelement 52 mit der Stopfbuchsbrille 38 verbunden, sondern auch über das stationäre Element 32 an der übergeordneten Baueinheit 10 befestigt. Hierzu weist das stationäre Element 32 eine Gewindebohrung 66 auf, in die ein Endabschnitt 64a des Führungsbolzen 64 eingeschraubt ist. Der Führungsbolzen 64 ist an einem Abschnitt, der dem Endabschnitt 64a benachbart ist, mit einem Vorsprung 68 versehen, der an dem stationären Element 32 anliegt. Über den Führungsbolzen 64 kann die Stopfbuchsbrille 38 in Umfangsrichtung abgestützt werden, so dass derartige Bewegungskomponenten keinen nachteiligen Einfluss auf die Funktion der Spannvorrichtung, insbesondere die Spannelemente 16, ausüben können.

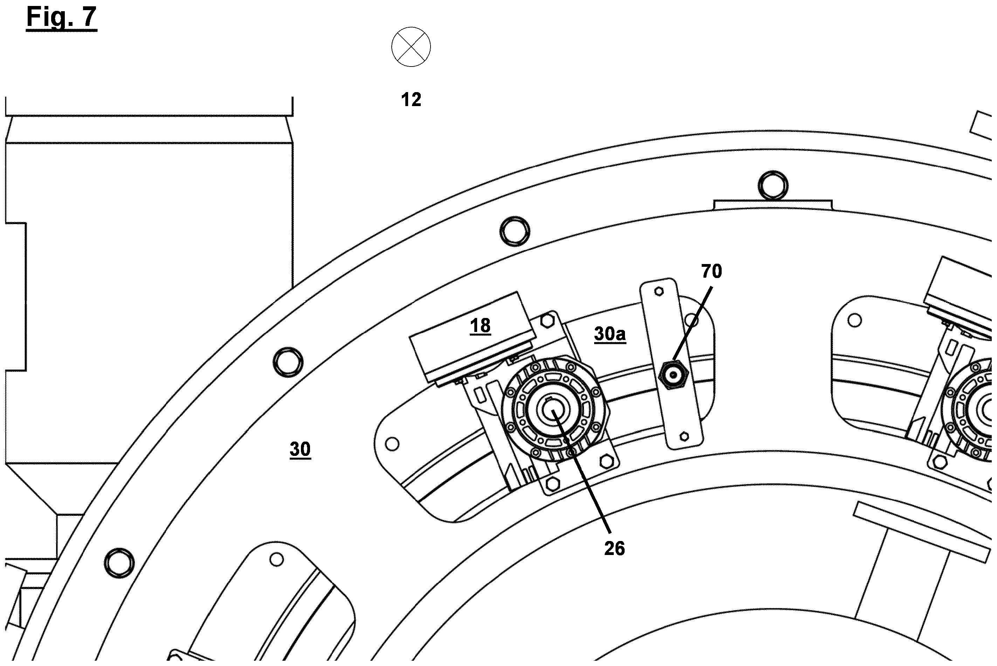

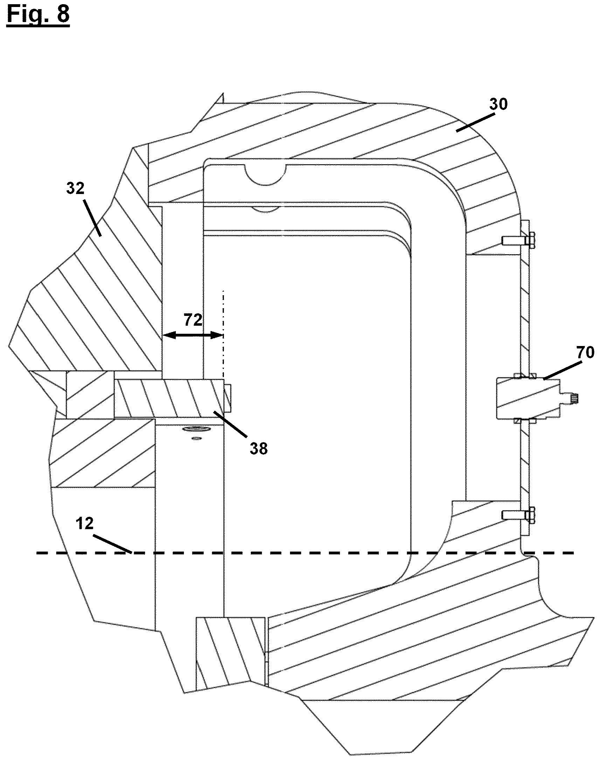

Ferner kann eine erfindungsgemäße Vorrichtung 14 mit einem Wegesensor 70 versehen sein (siehe Figur 7). Der Wegesensor 70 kann beispielsweise an dem Deckelelement 30 betriebsfest befestigt sein, so dass er durch die Deckelöffnung 30a einen Abstand der Stopfbuchsbrille 38 von der übergeordneten Baueinheit 10 erfasst. Dies kann beispielsweise ein Abstand 72 (siehe Figur 8) zwischen dem axial äußeren Ende der Stopfbuchsbrille 38 und der axial äußeren Oberfläche des beweglichen Elements 48 sein. So kann eine Schiefstellung der Stopfbuchsbrille 38 erkannt werden.

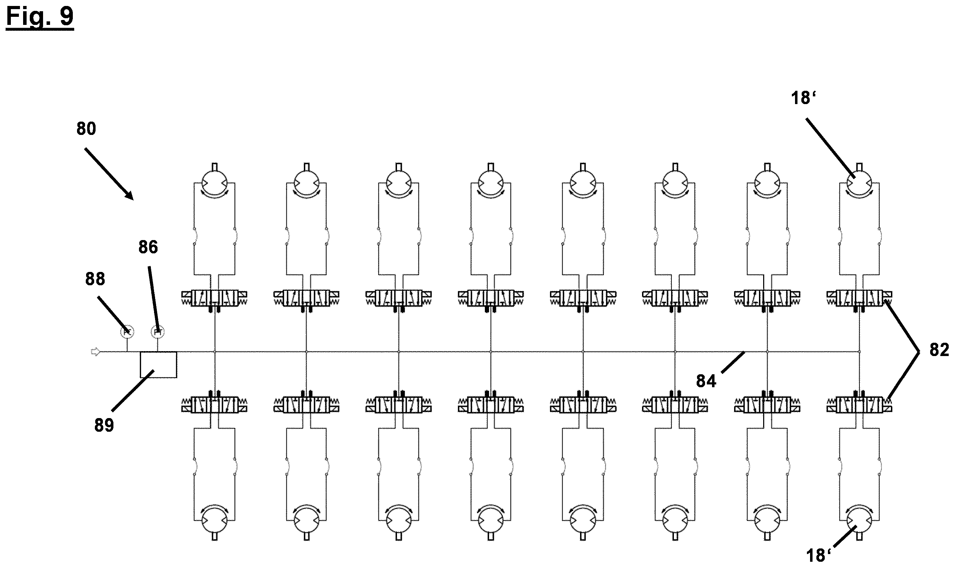

Figur 9 zeigt eine schematische Darstellung einer erfindungsgemäßen Ventilanordnung 80, mit der motorischen Antriebseinheiten 18' gesteuert werden, um die Spannelemente 16 der Stopfbuchspackung 42 nachzuziehen.

Die Anzahl der motorischen Antriebseinheiten 18' entspricht der Anzahl der Spannelemente 16. In dem Ausführungsbeispiel gemäß Figur 1 ist an den in Axialrichtung gesehenen vorderen und hinteren Enden des Druckdrehfilters 10 eine erfindungsgemäße Vorrichtung 14 mit jeweils acht Spannelementen 16 vorgesehen. Es versteht sich jedoch von selbst, dass die Erfindung nicht auf diese Anzahl beschränkt ist.

Die Ventilanordnung 80 ist dazu ausgebildet und bestimmt, den fluidisch antreibbaren Antriebseinheiten 18' ein Antriebsfluid F zuzuführen bzw. von diesen wieder abzuführen. Jeder fluidisch antreibbaren Antriebseinheit 18' ist hierfür eine Ventileinheit 82 zugeordnet. Den Ventileinheiten 82 wird über ein Leitungssystem 84 das Antriebsfluid F zugeführt bzw. von diesen wieder abgeführt.

Der Druck mit dem das Antriebsfluid F den Ventileinheiten 82 zugeführt wird, kann mittels eines Drucksensors 86 erfasst werden. Ferner kann ein elektrisch geregelter Druckminderer 88 vorgesehen sein, welcher in Abhängigkeit des Drucksensors 86 den Druck im Leitungssystem 84 unter einem vordefinierten Maximaldruck hält.

Ferner kann eine Steuereinheit 89 vorgesehen sein, die wenigstens zwei Betriebsmodi aufweist. In einem ersten Betriebsmodus steuert die Steuereinheit 89 die Ventileinheiten 82 im Sinne einer Antriebsfluidzuführung bzw. -abführung gemeinsam. In einem zweiten Betriebsmodus werden die Ventileinheiten 82 einzeln oder in Untergruppen im Sinne einer Antriebsfluidzuführung bzw. -abführung gesteuert.

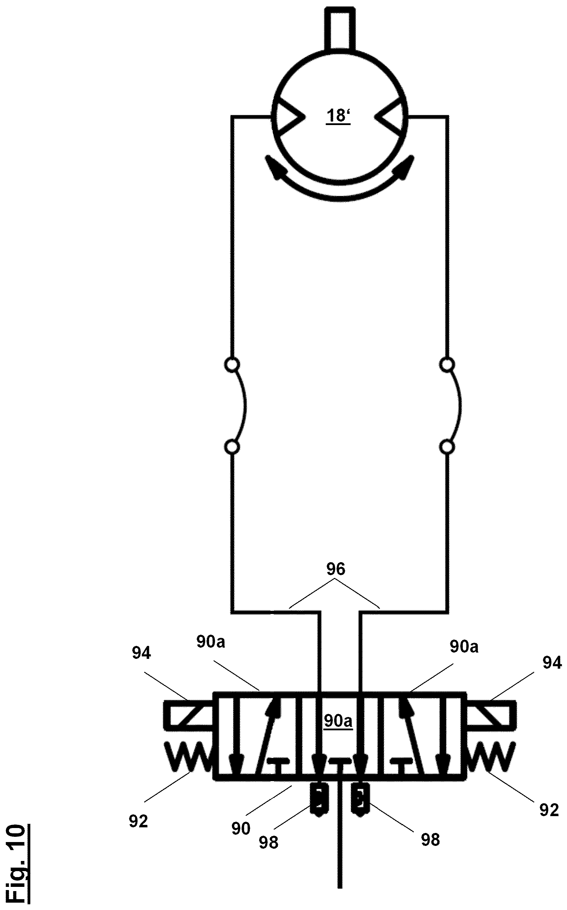

Erfindungsgemäß kann jeder fluidisch antreibbaren motorischen Antriebseinheit 18' eine Ventileinheit 82 zugeordnet sein. Figur 10 stellt eine solche Kombination einer fluidisch antreibbaren motorischen Antriebseinheit 18' mit einer Ventileinheit 82 in neutraler Mittelstellung dar.

Die Ventileinheit 82 umfasst ein 5/3-Wegeventil bekannten Aufbaus und bekannter Funktion.

In der neutralen Mittelstellung der Ventileinheit 82 wird der motorischen Antriebseinheit 18' kein Antriebsfluid F zugeführt, so dass die motorische

Antriebseinheit 18' keine An- oder Abtriebsleistung erzeugt. Das zugeordnete Spannelement 16 verbleibt in seiner eingestellten Position.

Wird die Ventileinheit 82 in eine der beiden anderen Stellungen übergeführt, so kann der motorischen Antriebseinheit 18' über eine Leitung 90 Antriebsfluid F zugeführt werden. Dies bewirkt eine Rotation der motorischen Antriebseinheit 18' im Uhrzeigersinn oder entgegen des Uhrzeigersinns. Die Rotation der motorischen Antriebseinheit 18' kann durch Änderung der Stellung der Ventileinheit 82 und der damit verbundenen Änderung der Fließrichtung des Antriebsfluides F umgekehrt werden.

Je nach Stellung der Ventileinheit 82 erzeugt die motorische Antriebseinheit 18' daher eine Antriebskraft oder eine Abtriebskraft. Das zugeordnete Spannelement 16 wird hierdurch angezogen und somit die Stopfbuchspackung 42 gegen die übergeordnete Baueinheit 10 gedrängt bzw. wird das Spannelement 16 von der Stopfbuchspackung 42 entfernt und diese somit gelockert.

Je nach Stellung der Ventileinheit 82 wird wenigstens eine Leitung 90 in einen Stoßdämpfer 92 entlüftet. Im vorliegenden Zusammenhang beschreibt der Begriff "Entlüften" das Abführen des Antriebsfluides F aus der Antriebseinheit 18' über die mit ihr verbundenen Leitung 90. Das Antriebsfluid F kann Luft, Stickstoff und dergleichen sein.

## Patentansprüche

1. Vorrichtung (14) zum Spannen einer Stopfbuchspackung (42), welche gegen eine durch die Stopfbuchspackung (42) abzudichtende und wie die Stopfbuchspackung (42) nicht zu der Spannvorrichtung (14) gehörende übergeordnete Baueinheit (10) anliegt, insbesondere zum Spannen der Stopfbuchspackung (42) eines Druckdrehfilters (10), umfassend
• eine Stopfbuchsbrille (38), welche dazu ausgebildet und bestimmt ist, gegen eine freie Seite der Stopfbuchspackung (42) anzuliegen, und
• eine Mehrzahl von Spannelementen (16), welche dazu ausgelegt und bestimmt sind, die Stopfbuchsbrille (38) gegen die Stopfbuchspackung (42) und somit die Stopfbuchspackung (42) gegen die übergeordnete Baueinheit (10) zu drängen, wobei jedem der Spannelemente (16) eine gesonderte motorische Antriebseinheit (18) zugeordnet ist
**dadurch gekennzeichnet,**
**dass** wenigstens eine motorische Antriebseinheit (18), vorzugsweise alle motorischen Antriebseinheiten (18), ein Untersetzungsgetriebe (20), beispielsweise ein Schneckengetriebe umfassen.

2. Vorrichtung nach Anspruch 1,
**dadurch gekennzeichnet, dass** wenigstens eine motorische Antriebseinheit (18), vorzugsweise alle motorischen Antriebseinheiten (18), eine fluidisch antreibbare motorische Antriebseinheit umfasst, beispielsweise eine pneumatisch antreibbare motorische Antriebseinheit, vorzugsweise einen pneumatisch betätigbaren Radialkolbenmotor.

3. Vorrichtung nach Anspruch 1,
**dadurch gekennzeichnet, dass** die antriebsseitig mit der fluidisch antreibbaren motorischen Antriebseinheit (18) verbundene Schnecke des Schneckengetriebes (20) abtriebsseitig mit einem axial festen Keilverzahnungselement (24) des Schneckengetriebes in Untersetzungseingriff steht, und dass das Keilverzahnungselement (24) mit einem Spannelement (16) in Gewindeeingriff steht, das axial verlagerbar, aber drehbar angeordnet ist.

4. Vorrichtung nach Anspruch 3,
**dadurch gekennzeichnet, dass** das Keilverzahnungselement (24) an seinem freien, d.h. vom Spannelement (16) abgewandten, Ende (24a) mit einem Werkzeugangriffsprofil (26) ausgebildet ist.

5. Vorrichtung nach einem der vorhergehenden Ansprüche, **dadurch gekennzeichnet, dass** die Stopfbuchsbrille (38) oder ein mit ihr verbundenes Element (52) wenigstens eine axiale Durchgangsöffnung (60) aufweist, in welcher ein Axialgleitlager (62) aufgenommen ist, welches dazu ausgebildet und bestimmt ist, mit einem zugeordneten an der übergeordneten Baueinheit (10) befestigten Führungsbolzen (64) in Gleiteingriff zu treten.

6. Vorrichtung nach einem der vorhergehenden Ansprüche, **dadurch gekennzeichnet, dass** die Stopfbuchsbrille (38) in einem orthogonal zu ihrer Längserstreckung genommenen Schnitt eine im Wesentlichen rechteckige Querschnittsfläche aufweist.

7. Vorrichtung nach Anspruch 6, **dadurch gekennzeichnet, dass** die lange Seite des Rechtecks wenigstens dreimal so lang wie die kurze Seite des Rechtecks ist.

8. Vorrichtung nach einem der vorhergehenden Ansprüche, **dadurch gekennzeichnet, dass** die Stopfbuchsbrille (38) in eine Mehrzahl von Segmenten (38a) unterteilt ist.

9. Vorrichtung nach Anspruch 8,
**dadurch gekennzeichnet, dass** die freien Enden zweier einander benachbarter Segmente (38b, 38c) formschlüssig ineinandergreifend ausgebildet sind, wobei vorzugsweise der Formschluss in wenigstens zwei, höchstvorzugsweise allen drei der Richtungen Axialrichtung, Radialrichtung und Umfangsrichtung wirkt.

10. Vorrichtung nach Anspruch 8 oder 9,
**dadurch gekennzeichnet, dass** die freien Enden wenigstens zweier einander benachbarter Segmente (38b, 38c) mittels wenigstens einer radial verlaufenden Schraube (56) miteinander verbunden sind,
und/oder
dass die freien Enden wenigstens zweier einander benachbarter Segmente (38b, 38c) mittels eines axial an den Segmenten anliegenden Koppelelements (52) miteinander verbunden sind.

11. Vorrichtung nach einem der vorhergehenden Ansprüche, **dadurch gekennzeichnet, dass** an wenigstens drei über den Umfang der Stopfbuchsbrille (38) verteilt angeordneten Stellen jeweils wenigstens ein Wegesensor (60) angeordnet ist, der dazu ausgelegt und bestimmt ist, den Abstand (72) der Stopfbuchsbrille (38) von der übergeordneten Baueinheit (48) zu erfassen.

12. Vorrichtung nach einem der vorhergehenden Ansprüche, **dadurch gekennzeichnet, dass** wenigstens ein Drucksensor (86) vorgesehen ist, welcher dazu ausgelegt und bestimmt ist, den Druck zu erfassen, mit dem das Antriebsfluid (F) zugeführt wird.

13. Vorrichtung nach einem der vorhergehenden Ansprüche, **dadurch gekennzeichnet, dass** sie ferner eine Ventilanordnung (80) umfasst, welche dazu ausgebildet und bestimmt ist, der Mehrzahl von fluidisch antreibbaren motorischen Antriebseinheiten (18) Antriebsfluid (F) zuzuführen bzw. von diesen wieder abzuführen.

14. Vorrichtung nach Anspruch 13, **dadurch gekennzeichnet, dass** jeder fluidisch antreibbaren motorischen Antriebseinheit (18) eine gesonderte Ventileinheit (82) zugeordnet ist, wobei vorzugsweise wenigstens eine Ventileinheit (82) ein 5/3-Wegeventil umfasst.

15. Vorrichtung nach Anspruch 13 oder 14, **dadurch gekennzeichnet,** eine Steuereinheit (89) vorgesehen sein, welche dazu ausgelegt und bestimmt ist, in einem ersten Betriebsmodus die Ventileinheiten (82) gemeinsam im Sinne einer Antriebsfluidzuführung bzw. -abführung anzusteuern, und in einem zweiten Betriebsmodus die Ventileinheiten (82) einzeln oder in Untergruppen im Sinne einer Antriebsfluidzuführung bzw. -abführung anzusteuern.

## Claims

1. Device (14) for tensioning a stuffing box packing (42) which bears against a higher-level structural assembly unit (10) to be sealed by the stuffing box packing (42) and, like the stuffing box packing (42), does not belong to the tensioning device (14), in particular for tensioning the stuffing box packing (42) of a pressure rotary filter (10), comprising
- a gland follower (38), which is designed and intended to bear against a free side of the stuffing box packing (42), and
- a plurality of tensioning elements (16) which are designed and intended to press the gland follower (38) against the stuffing box packing (42) and thus the stuffing box packing (42) against the higher-level assembly unit (10), wherein each of the tensioning elements (16) is assigned a separate motor drive unit (18)
**characterised in**
**that** at least one motor drive unit (18), preferably all motor drive units (18), comprise a reduction gear (20), for example a worm gear.

2. Device according to claim 1,
**characterised in that** at least one motor drive unit (18), preferably all motor drive units (18), comprises a fluidically drivable motor drive unit, for example a pneumatically drivable motor drive unit, preferably a pneumatically actuable radial piston motor.

3. Device according to claim 1,
**characterised in that** the connected worm of the worm gear unit (20) connected on the drive side to the fluidically drivable motor drive unit (18) is in reduction engagement on the output side with an axially fixed wedge-tooth element (24) of the worm gear unit, and **in that** the wedge-toothed element (24) is in threaded engagement with a tensioning element (16) which is axially displaceable but rotatably arranged.

4. Device according to claim 3,
**characterised in that** the wedge-shaped tooth element (24) is formed at its free end (24a), i.e. the end facing away from the tensioning element (16), with a tool engagement profile (26).

5. Device according to one of the preceding claims,
**characterised in that** the gland follower(38) or an element (52) connected to it has at least one axial through-opening (60) in which an axial slide bearing (62) is accommodated, which is designed and intended to enter into sliding engagement with an associated guide bolt (64) fastened to the higher-level structural unit (10).

6. Device according to one of the preceding claims,
**characterised in that** the gland follower (38) has a substantially orthogonal cross-sectional area in a section taken rectangularly to its longitudinal extension.

7. Device according to claim 6,
**characterised in that** the long side of the rectangle is at least three times as long as the short side of the rectangle.

8. Device according to one of the preceding claims,
**characterised in that** the gland follower (38) is divided into a plurality of segments (38a).

9. Device according to claim 8,
**characterised in that** the free ends of two adjacent segments (38b, 38c) are designed to interlock, preferably with the interlocking effect acting in at least two, most preferably all three of the directions: axial direction, radial direction and circumferential direction.

10. Device according to claim 8 or 9,
**characterised in that** the free ends of at least two adjacent segments (38b, 38c) are connected to one another by means of at least one radially extending screw (56),
and/or
that the free ends of at least two adjacent segments (38b, 38c) are connected to each other by means of a coupling element (52) axially adjacent to the segments.

11. Device according to one of the preceding claims,
**characterised in that** at least one position sensor (60) is arranged at at least three points distributed around the circumference of the gland follower (38), which position sensor is designed and intended to detect the distance (72) between the gland follower (38) and the higher-level assembly unit (48).

12. Device according to one of the preceding claims,
**characterised in that at** least one pressure sensor (86) is provided, which is designed and intended to detect the pressure with which the drive fluid (F) is supplied.

13. Device according to one of the preceding claims,
**characterised in that** it further comprises a valve arrangement (80) which is designed and intended to supply drive fluid (F) to the plurality of fluidically drivable motor drive units (18) or to remove it from them again.

14. Device according to claim 13,
**characterised in that** each fluidically drivable motor drive unit (18) is assigned to a separate valve unit (82), wherein preferably at least one valve unit (82) comprises a 5/3-way valve.

15. Device according to claim 13 or 14,
**characterised in that a** control unit (89) is provided, which is designed and intended, in a first operating mode, to control the valve units (82) jointly in the sense of a drive fluid supply or discharge, and, in a second operating mode, to control the valve units (82) individually or in subgroups for the purpose of supplying or discharging drive fluid.

## Revendications

1. Dispositif de serrage (14) pour serrer une garniture de presse-étoupe (42), s'appuyant contre une unité structurelle supérieure (10) qui est à étanchéifier par la garniture de presse-étoupe (42) et qui, tout comme la garniture de presse-étoupe (42), ne fait pas partie du dispositif de serrage (14), en particulier pour serrer la garniture de presse-étoupe (42) d'un filtre rotatif sous pression (10), comprenant
• un fouloir de presse-étoupe (38) conçu et agencé pour s'appuyer contre un côté libre de la garniture de presse-étoupe (42), et
• une pluralité d'éléments de serrage (16) conçus et agencés pour presser le fouloir de presse-étoupe (38) contre la garniture de presse-étoupe (42) et ainsi pour presser la garniture de presse-étoupe (42) contre l'unité structurelle supérieure (10), chacun des éléments de serrage (16) étant associé à une unité d'entraînement motorisée (18) distincte,
**caractérisé en ce qu'**au moins une unité d'entraînement motorisée (18), de préférence toutes les unités d'entraînement motorisées (18), comprend un réducteur de vitesse (20), par exemple un engrenage à vis sans fin.

2. Dispositif selon la revendication 1,
**caractérisé en ce qu'**au moins une unité d'entraînement motorisée (18), de préférence toutes les unités d'entraînement motorisées (18), comprend une unité d'entraînement motorisée à commande fluidique, par exemple une unité d'entraînement motorisée à commande pneumatique, de préférence un moteur à pistons radiaux à commande pneumatique.

3. Dispositif selon la revendication 1,
**caractérisé en ce que** la vis sans fin de l'engrenage à vis sans fin (20), reliée côté entrée à l'unité d'entraînement motorisée (18) à commande fluidique, est en prise de réduction côté sortie avec un élément à denture cannelée (24) axialement fixe de l'engrenage à vis sans fin, et **en ce que** l'élément à denture cannelée (24) est en prise par vissage avec un élément de serrage (16) qui est disposé de manière à pouvoir être déplacé axialement, mais à pouvoir tourner.

4. Dispositif selon la revendication 3,
**caractérisé en ce que**, à son extrémité libre (24a), c'est-à-dire détournée de l'élément de serrage (16), l'élément à denture cannelée (24) est pourvu d'un profil d'attaque par un outil (26).

5. Dispositif selon l'une des revendications précédentes,
**caractérisé en ce que** le fouloir de presse-étoupe (38) ou un élément (52) relié à celui-ci présente au moins une ouverture de passage axiale (60) dans laquelle est logé un palier lisse axial (62) conçu et agencé pour venir en prise par glissement avec un boulon de guidage (64) associé fixé à l'unité structurelle supérieure (10).

6. Dispositif selon l'une des revendications précédentes,
**caractérisé en ce que** le fouloir de presse-étoupe (38) présente, en coupe orthogonale à son extension longitudinale, une surface de section transversale sensiblement rectangulaire.

7. Dispositif selon la revendication 6,
**caractérisé en ce que** le côté long du rectangle est au moins trois fois plus long que le côté court du rectangle.

8. Dispositif selon l'une des revendications précédentes,
**caractérisé en ce que** le fouloir de presse-étoupe (38) est subdivisé en une pluralité de segments (38a).

9. Dispositif selon la revendication 8,
**caractérisé en ce que** les extrémités libres de deux segments (38b, 38c) adjacents l'un à l'autre sont conçues de manière à s'engager l'une dans l'autre par complémentarité de forme, la liaison par complémentarité de forme agissant de préférence dans au moins deux, de manière particulièrement préférée, dans toutes les trois directions suivantes : direction axiale, direction radiale et direction circonférentielle.

10. Dispositif selon la revendication 8 ou 9,
**caractérisé en ce que** les extrémités libres d'au moins deux segments (38b, 38c) adjacents l'un à l'autre sont reliées entre elles au moyen d'au moins une vis radiale (56), et/ou
**en ce que** les extrémités libres d'au moins deux segments (38b, 38c) adjacents l'un à l'autre sont reliées entre elles au moyen d'un élément d'accouplement (52) qui s'appuie axialement contre les segments.

11. Dispositif selon l'une des revendications précédentes,
**caractérisé en ce qu'**au moins un capteur de déplacement respectif (60) est disposé à au moins trois emplacements répartis sur la circonférence du fouloir de presse-étoupe (38), lequel capteur est conçu et agencé pour détecter la distance (72) entre le fouloir de presse-étoupe (38) et l'unité structurelle supérieure (48).

12. Dispositif selon l'une des revendications précédentes,
**caractérisé en ce qu'**il est prévu au moins un capteur de pression (86) conçu et agencé pour détecter la pression à laquelle le fluide d'entraînement (F) est alimenté.

13. Dispositif selon l'une des revendications précédentes,
**caractérisé en ce qu'**il comprend en outre un ensemble de vanne (80) conçu et agencé pour alimenter en fluide d'entraînement (F) la pluralité d'unités d'entraînement motorisées (18) à commande fluidique ou à évacuer ledit fluide de celles-ci.

14. Dispositif selon la revendication 13,
**caractérisé en ce qu'**une unité de vanne séparée (82) est associée à chaque unité d'entraînement motorisée (18) à commande fluidique, de préférence, au moins une unité de vanne (82) comprenant une vanne à 5 voies/3 positions.

15. Dispositif selon la revendication 13 ou 14,
**caractérisé en ce qu'**il est prévu une unité de commande (89) qui est conçue et agencée, dans un premier mode de fonctionnement, pour commander les unités de vanne (82) conjointement dans le sens d'une alimentation ou d'une évacuation du fluide d'entraînement, et, dans un deuxième mode de fonctionnement, pour commander les unités de vanne (82) individuellement ou en sous-groupes dans le sens d'une alimentation ou d'une évacuation du fluide d'entraînement.
